# EUROPEAN PATENT APPLICATION

(11) **EP 3 944 761 A1**
(43) Date of publication of application: **02.02.2022**
(21) Application number: 20188158.8
(22) Date of filing: 28.07.2020
(51) Int. Cl.: A01M 7/00

(54) **FLUID ATOMIZING MACHINE AND METHOD FOR SPRAYING AN ATOMIZED FLUID ON A TARGET USING A FLUID ATOMIZING MACHINE**

(71) Applicant: Robert Bosch GmbH, 70442 Stuttgart (DE)
(72) Inventor: De Gennaro, Daniele, 70056 Molfetta (IT); Lucibello, Stefano, 8710 Cosenza (IT); Marziliano, Giuseppe, 70020 Bitetto (Bari) (IT)

(57) **Abstract**

The present invention relates to a fluid atomizing machine (10) comprising a sensing device (1) having at least one sensor (4), preferably a radar sensor, which is configured to determine a presence of at least one target (t), preferably a tree; an irrigation device (3) having a fluid tank (5), a pump (6) and a plurality of electrically actuated nozzles (7) which are configured to spray a fluid from the fluid tank (5) onto the target (t), preferably the tree; and a processing unit (2), wherein the processing unit (2) is configured to receive data from the sensor (4), preferably the radar sensor, and to process the data provided by the sensor (4), preferably the radar sensor, and to calculate flow rates for the fluid and to actuate at least one nozzle (7) according to a position of the target (t), preferably the tree, and wherein the irrigation device (3) is configured to eject the fluid from the nozzles (7) according to the calculated flow rate.

## Description

The invention relates to a fluid atomizing machine and to a method for spraying an atomized fluid on a target using a fluid atomizing machine.

### Related prior art

Fluid atomizing machines can be used for plant treatment, for example when spraying a water-pesticide mixture on the plants. Usually a flow rate of the water-pesticide mixture which is needed to achieve a desired effect or amount of covering the plants is estimated by an operator of the fluid atomizing machine, which is usually carried by a tractor or similar. Such water-pesticide atomizing machines have usually the purpose of atomizing water with an additional chemical product in order to lower or even prevent a vegetable or tree illness.

DE 20 2014 001 054 U1 describes an atomizing machine for an agricultural machine which has a lever arm with nozzles thereon.

### Disclosure of the invention

The invention relates to a fluid atomizing machine according to claim 1 and to a method for spraying an atomized fluid on a target using a fluid atomizing machine according to claim 12.

Further developments are subject of the dependent claims.

### Advantages of the invention

The basic idea of the invention is to provide an optimized distribution of fluid to be sprayed on a target, for example a water-pesticide mixture, by automatically selecting corresponding means for spraying, for example a right number of nozzles, when approaching the target.

According to the invention, the fluid atomizing machine comprises a sensing device having at least one sensor, preferably a radar sensor, which is configured to determine a presence, preferably a position, of at least one target, preferably a tree; an irrigation device having a fluid tank, a pump and a plurality of electrically actuated nozzles which are configured to spray a fluid from the fluid tank onto the target, preferably the tree; and a processing unit, wherein the processing unit is configured to receive data from the sensor, preferably the radar sensor, and to process the data provided by the sensor, preferably the radar sensor, and to calculate flow rates for the fluid and to actuate at least one nozzle according to a position of the target, preferably the tree, and wherein the irrigation device is configured to eject the fluid from the nozzles according to the calculated flow rate.

By an optimized path around or close to a target or between targets and by an optimally adapted flow rate it is possible to optimize the amount of fluid which is needed to be sprayed on a target and to achieve the desired effect, for example when a water-pesticide mixture is sprayed on a plant in order to lower or prevent illness of the plant.

The actuation and also the activation of the nozzle(s) which should be used/selected to spray the fluid onto a target can happen automatically, for example based on sensor data regarding the distance of the target, the location of the target relative to the atomizing machine and/or similar data. When using currently common machines, the command to use only nozzles on the side of the machine which is next to the target is manually operated by a driver (operator) of the machine who can select operation of one or both sides of the operating nozzles on the machine.

The needed data for spraying can be provided/collected by on-board sensors. Further, a suitable mapping and processing algorithm can supply and show useful information on a display or tablet, for example by using a proper app software, or any other similar electronic device.

By using the atomizing machine it is further possible to choose an optimized path through the countryside in order to reduce downtimes; orchard mapping can be performed; fruit growth tracking can be performed by sensors (cameras) and comparison with older data (by the processing unit and the sensing device); it is further possible to provide plants health monitoring; provide an estimation of water and/or pesticide mixture necessary to treat all plants; provide a definition of borders for selective treatment; provide treatment records; provide a connection with other sensors to summarize records over time; provide a self-diagnosis for nozzle maintenance. The named performances can be achieved for example by the sensing device and by the processing unit.

The nozzle can be opened and closed by actuation and therefore spray the fluid or not.

The choice and number of components (nozzles, tank size, processing electronics, sensors, etc.) can be applied depending on purpose. It is possible to attain different degrees of technological implementation according to demand what allows cost containment, quick prototyping and modularity. The system (processing unit) is able to use a virtual map where the targets, for example trees, are identified. The processing unit is able to decide in real-time, when the nozzles are to be opened and at which intensity of the flow. An expansion of this system can lead to addition of many useful functions such as field mapping, disease detection, previously treated plants identification, selective specimen treatment, self-diagnosis, irrigation history tracking, and path optimization.

The flow rates can be calculated based on the sensed data from the sensing device by an algorithm which can try to achieve a desired effect by using a corresponding amount of fluid for this effect (for example to use enough pesticide).

The pump can be used to pressurize the fluid from the tank.

Further, the sensors of the sensing device can be placed at the atomizing machine and can be required to provide details about the surroundings to detect the plants and if needed to be SLAM algorithms (simultaneous localisation and mapping) and IR technology. The choice of sensors for this purpose can be aimed at maximal performance/cost effectiveness.

The atomizing machine can be used in a field of trees, where at least no other tree specimens or particular obstacles are present. Keeping this in mind, an array of proximity sensors (e.g. ultrasonic or electromagnetic sensors) with the same working range of the nozzles could be sufficient to detect the presence or the lack of trees and their distance. The proximity sensors can detect simply the surrounding plants as they pass by when moving the machine. Water mixture saving could therefore be accomplished by automatically sparing the flow that would be wasted on the space in-between trees.

Regarding the processing unit, it can have enough processing power, memory and bandwidth to be able to carry out all the algorithm operations, in particular system localization, field mapping, image processing, sensors and nozzles actuation, statistical data recording and post-processing. At any given time, the automated system may be overruled and a manual mode activated, where the user is given the possibility to define which nozzles are to be activated, not much differently than a current atomizer. If a mobile network is available on the field, processed data can be sent to a cloud systems or to a mobile device provided with an application, which manages all useful information and can displays them in a fitting user interface. Otherwise, the system may be equipped with similarly compliant electronic displays/devices, which can be accessed to look up system information.

The irrigation device can have one or more tanks (fluid accumulator); a Pump unit (flow rate and pressure); a Dosing system; Nozzles positioned at varying angles and a Fan. The pump can be powered by an external machine (e.g. tractor) and provides the required flow rate at the desired pressure wherein these two parameters are important to offer the desired quantity of water mixture. A water line can connect the pump to a nozzles metering unit (e.g. electro-actuated valves etc.) that introduces pressure losses until the desired pressure value necessary to ensure the desired flow rate and reach to the target is obtained.

The nozzles are spraying systems with a variable geometry (e.g. electro actuated injectors) or injectors system that can regulate the flow rate and their cone aperture. This feature plus the desired pressure value allows covering most possible targets projected surfaces with the water spray cone. The fan ensures the water nebulization and the effectiveness on distance. For the case that only proximity sensors and or satellite map is implemented, the irrigation device can be triggered only side-wise, not being able to detect the shape of the targets (trees) but only their presence. In this configuration the device requires only the dosing units and it is not necessary to adopt actuated nozzles with varying geometry to govern the aperture. When additional or other sensors are employed and/or an higher degree of control is required, the processing unit can acquire the target's relative position and calculates the necessary water cone aperture required to overlay with the calculated solid angle and decides which nozzles to open and their apertures as function of the target (tree) height and projected surface. The processing unit works in accordance with the target's distance and vehicle's speed information to determine when to actuate the dosing system. Further, type, size and position of targets can be recognized. An optimized path can be determined and areas which do not need to be sprayed can be minimized on this path. For target detection, different magnifications of cameras for a target (plant) detecting algorithm can be used.

Commonly known algorithms for a magnification approach for pattern recognition of plants can generally be used. According to the invention it is now possible to find a so called "smart path" and an improved determination of type, size and position of trees (plants). Further, the use of different magnifications of the camera for the plant detection algorithm, for example in addition to already known algorithms, is possible and/or an improvement of the plant detection by SLAM algorithms.

It is also possible to apply different approaches to define what is a smart path, examples are described in the following. It may either be the most sustainable to follow in terms of resources depleted and environment safeguarding, the most extensive in terms of coverage of plants watering or treatment, the most economical in terms of overall number of passes over the same area. In an agricultural environment the changes of landscape and overall surface are slow to take place over time, giving the chance of more durable mappings of the area and possibility to improve the path decision over time.

Possibly after first few runs in the field with the machine, the system may have recorded the spots where plants were detected and/or where it was requested to spray, the path normally followed and the obstacles along it, and the resources consumed while following these paths (time, fuel, water, etc.).

Further, this information allows producing a map of absolute coordinates (if GPS is available) or relative distances between hotspots (e.g. beacons, Wi-Fi access points, ...). By aid of satellite imagery, it is also possible to scan paths, which have not been mapped during first runs through the field, in order to be able to define alternative possible routes for the machine in case of obstacles or for optimization purposes. Other relevant navigation points may be added by means of a map-aided localization on some display-provided device (e.g. water wells, off-limits areas, virtual walls).

Further, the system can hence calculate using historical data, seasonal predictions and resupply point locations and (for) the overall water or pesticide effort for the latest paths followed. The system can take into account information from the already mentioned processes and the machine encumbrance to evaluate the resources effort calculating all possible paths, giving the best solution according to the logics of most sustainable, most economical, most extensive coverage. The user is able to follow the new path and the system records the real resources effort and presence of maps. Finally, the machine can update with data from the previously mentioned steps (information) and calculates new possible routes.

The processing unit can further be equipped with a post processing system which can supply useful information on tablet (with dedicated app) or any other similar electronic device. As an example an optimized path through countryside, an estimation of water quantity and/or pesticide necessary to cover the full area of the field/target, an estimation of fuel consumption, a smart path between water supplies to avoid following twice the same path between plants and effectively plan the full irrigation without downtimes and wastes, provide suggestions for optimized water supplies dislocation on territory or other useful statistics.

Therefore, the system (processing unit) can create a virtual map where the trees are identified (e.g. a map of the countryside coupling with a radar system). Step by step the system can decide when the nozzles will open and also the intensity of the jet flow. The system (atomizing machine) can be composed of subsystems that are a self-localization system to define vehicle's position in the field, a target acquisition system in order to define the relative position between the irrigation device and the target location.

Before a target (tree) treatment the atomizing system can supply the following information (to a user and/or to a processing unit): an optimized path through the countryside, an estimation of water quantity and/or pesticide necessary to cover the full area, an estimation of fuel consumption, a smart path between water supplies to avoid following twice the same path between targets (plants) and effectively plan the full irrigation without downtimes and wastes, suggestions for optimized water supplies dislocation on territory or other useful statistics.

After the treatment, some statistics about the work done can be supplied (stored) such as real vs. estimated water consumption, effectiveness of treatment, covered area and so on.

According to a further possible embodiment of the fluid atomizing machine, the sensing device is configured to provide real-time target presence measurements and a relative position between the irrigation device and the target.

According to a further possible embodiment of the fluid atomizing machine, the sensor comprises a visual sensor and/or an infrared sensor and/or a proximity sensor having at least a same working range as the nozzles.

It is also possible to use high definition cameras, also in stereoscopic configuration to allow for height and depth calculation (accomplished through trigonometry and with appropriate alignment error correction between the cameras). Optical zoom and/or different lenses (magnifying) may be employed to be able to magnify and reach high resolution (pixel density) over the single target (plant).

Further, different magnifications can be operated to focus on details during the different phases of the target detection algorithm of the processing unit. Recognition and fruit growth tracking, for example, can be operated to record the status of the orchard yield over time and decide when the fruits are ripe for harvesting.

The cameras can be always active when the system is turned on (unless a proximity sensor or other rangefinder is used to determine when the cameras need activation) and acquisition can start immediately with a frame rate per second suitable with the atomizer speed (moving speed of the atomizing machine over ground). In this phase, wide-angle lenses for the cameras can be used, thus giving more emphasis to the foreground and closest objects. The use of proximity sensors can be reasoned to identify when to activate the stereoscopic cameras to match depth and proximity sensors signals, thus identifying as target (plant) everything under a predefined range and therefore passing the information to the actuation.

According to a further possible embodiment of the fluid atomizing machine, the tank comprises a water tank and a pesticide tank and the irrigation device is configured to provide the fluid as a water-pesticide mixture according to a predefined concentration.

According to a further possible embodiment of the fluid atomizing machine the processing unit comprises a positioning system or is configured to receive positioning data or satellite data from a positioning system or from a satellite, wherein the processing unit is configured to match the positioning data or satellite data with the data provided by the sensor.

By such an adoption of geolocalization technologies, it is possible to detect the position of the atomizing machine in the field of targets and match it with proximity sensors position to improve the accuracy of target detection, for example of plant detection, and avoid false positives detection or at least lower the probability for false detection. The precision of GPS receivers employed is important and the employment of differential GPS receivers could be worthwhile.

According to a further possible embodiment of the fluid atomizing machine the sensor comprises a Lidar or a rangefinder device and the processing unit is configured to determine a projected surface of the target and its distance from the fluid atomizing machine and to adapt a quantity of the sprayed fluid and to determine the at least one nozzle to be actuated.

The projected surface can correspond to that surface on which the fluid can be directly sprayed or at least that surface which should mostly be covered by the fluid, for example the leaves of a tree.

Light Detection And Ranging (LIDAR) and/or other rangefinders technologies to make use of Simultaneous Localization And Mapping (SLAM) algorithms can therefore be applied and used to improve the detection of the target (plant), for example for being able to build its 3D shape, record it and upgrade its shape as the plant grows for 3D mapping of the field and also allowing the processing unit to determine the projected surface of the Target (plant) and its distance and therefore calculate the necessary quantities of sprayed mixture and which nozzles need to be actuated.

Simultaneous localization and mapping (SLAM) algorithms are an available implementation, especially for locations lacking a good satellite coverage which may prove challenging for GPS receivers. SLAM provides information readily available for growth tracking, field path optimization, improvements on actuation control, unhealthy plants localization, etc... SLAM algorithms require a working array of sensors such as laser rangefinders, LIDAR, sonars, cameras, etc... The choice of which array of sensors is the fittest should be governed by other necessities of the system (such as plant detection). Geolocalization also gives the user the chance to define through an electronic device the desired area of treatment, therefore avoiding spraying the mixture on detected plants not owned by the farmer (for example at the border of the land property) or that do not require treatment.

According to a further possible embodiment of the fluid atomizing machine, the sensing device comprises a near infrared camera and the processing unit is configured to detect a near infrared reflexion from the target and to determine chemical and material properties of the target.

Infrared cameras can be used to detect the Near Infrared emission of the target (plants), because leaves tend to reflect it the most, allowing for better plant detection (superimposing with visible spectrum to highly improve plant detection algorithm results) and new scenarios for much more complex data elaboration, mixture flow optimization through estimation of chemicals absorption of leaves and disease prediction. Normalized Difference Vegetation Index (NDVI) or Near-infrared / Red / Green (NRG) are both ways to visualize the amounts of infrared and other wavelengths of light reflected from vegetation and can be used to evaluate the health of vegetation, because it's a snapshot of how much photosynthesis is happening.

In this sense Light flux sensors can be useful to correct the NDVI according to real-time lighting conditions (visibility, radiance, clouds) which are known to possibly affect results of such technique.

By providing the system with IR cameras, it is possible to profit from one of the main assets for plants recognition. Chlorophyll A has high reflectance of NIR and can be used as basis by means of opportune filters and indexes such as NDVI to detect the presence and health of a plant. The higher the NIR (near infrared) emission the healthier the plant (photosynthesis indicator). This information can be exploited and handed to the farmer or any system for yield estimation and countermeasures adoption. Chlorophyll fluorescence (Red and Near Infrared) has been found to provide information about photosynthesis slowing on herbicide-treated plants (lower emission), even though they do appear perfectly healthy at the naked eye. This last bit of information could enable the system to selectively choose not to overtreat plants, which have already a high level of treatment from previous passes. For the case where the system is not endowed with infrared cameras, detailed infrared satellite acquisitions may be requested for the area of interest, which can prove useful to have a detailed map to crosscheck against false positives of Haar cascade algorithm.

When a plant detection is triggered and the target acquired, the processing unit can use the collected information regarding the shape of the plant (cameras, IR, satellite, LIDAR, sonar, etc...) to build a projected surface and solid angle which frames the object also using feature detection algorithms if necessary (Sobel operator, Canny edge detection, Phase stretch transform, etc...). Together with the distance information coming from the stereoscopy, GPS receivers and rangefinders, the system can make all due calculations to define the required water/pesticide mixture concentration for the sprayed surface and therefore accordingly actuate the nozzles. According to detection and relative position, some nozzles will not be activated, avoiding waste and pollution. Actuation variables of each active nozzle are the fluid pressure and nozzle geometry. These variables will be calculated according to four main parameters: target's solid angle, relative position target/nozzle, quantity desired, speed.

According to a further possible embodiment of the fluid atomizing machine, the processing unit is configured to perform machine learning techniques for detecting the target and/or an area of the target on which the fluid has to be sprayed.

The processing unit processes in real time the images provided by the cameras and determines which objects are suitable to be targets (plants). To perform plant recognition an Haar cascade algorithm (as in Viola-Jones object detection framework) may be implemented, but current literature reports recognition rates not high enough to obtain an accuracy higher than 50%. It is therefore suggested to implement further steps to improve this accuracy. One of these steps may be the adoption of different magnifications (possibly optical to preserve high pixel density) to apply the Haar cascade algorithm once again on distinctive features of the plants (such as the leaves). Haar cascade requires the biggest learning database based on images of both plants and non-plants objects. One of these image collection databases is for example Imagenet, which boasts millions of images altogether. To improve the recognition pattern, it is possible to apply deformation algorithms during the learning phase. Haar cascade produces excellent results for face recognition systems, but needs adjustments to be fairly used for plant detection. When adopting deep learning techniques it is even possible to address the issue of identifying plant diseases when moving through the field. Zooming on a leaf and having the processing unit process the image and draw from its transferred learning of plant diseases may prove worthwhile to increment diagnosis and warrant an alert notification to the farmer. Through leaf identification, even different species of trees may be recognized and the system may be tuned to skip or modify the necessary quantity for the mixture. According to plant variety, it may even be possible to define and use multiple tanks to fuel the nozzles, allowing different chemical treatments without the need to pass on each plant specimen separately later. When starting recognizing the fruits on trees it would also be possible to keep track of growth over time, and therefore provide useful information to the grower about harvesting time and disease prevention.

The machine-learning algorithm is able to perform plant type detection, selection of proper treatment for plant size and type, plant and fruit growth tracking. In addition, plant health parameters can be computed (also with or without a learning algorithm) and a flow correction can be performed based on residual treatments (of plants).

According to a further possible embodiment of the fluid atomizing machine, the processing unit is configured to determine a spraying angle and at least one nozzle for targeted spraying and for adapting the spraying to a detected target distance.

It is also possible that pressure and/or flow meter sensors are used and adopted on the (hydraulic) system to diagnose real vs. estimated throughput of the atomizer, therefore being able to verify correct system functioning of all nozzles. Pressure sensors generally use a force collector (such as diaphragm, piston, bourdon tube, or bellows) to measure strain (or deflection) due to applied force over an area (pressure). Most common pressure sensors are piezoresistive strain gauge, capacitive, electromagnetic, piezoelectric, optical, potentiometric. Flow rate can be measured through instruments such as Coriolis, differential pressure, vortex, magnetic, ultrasonic, turbine and positive displacement meters.

According to a further possible embodiment of the fluid atomizing machine, the irrigation device has a fan for fluid nebulisation and a dosing system.

According to a further possible embodiment of the fluid atomizing machine, the nozzles have a variable geometry at their opening which enables the variation of the flow rate, wherein the nozzles can be individually opened and their flow rate varied.

According to the invention the method for spraying an atomized fluid on a target, preferably a tree, uses a fluid atomizing machine according to the invention and comprise the steps of determining a presence of at least one target, preferably a tree, by a sensing device having at least one sensor, preferably a radar sensor; spraying a fluid from the fluid tank onto the target by an irrigation device having a fluid tank, a pump and a plurality of electrically actuated nozzles; and receiving data from the sensor, preferably the radar sensor, and processing the data provided by the sensor, preferably the radar sensor, and calculating flow rates for the fluid by the processing unit and actuating at least one of the nozzles according to a position of the target, preferably the tree by the processing unit, wherein the irrigation device is configured to eject the fluid from the nozzles according to the calculated flow rate.

According to a further possible embodiment of the method, a fluid volume is estimated which is needed to fully cover a desired area of a surface of the target. A distance between the fluid atomizing machine and the target is estimated and a travelling speed of the fluid atomizing machine is estimated and afterwards a pressure value for the fluid is calculated and applied to the fluid, which is needed for the fluid to reach the target when sprayed by the nozzles.

According to a further possible embodiment of the method, the fluid is sprayed on different targets, which are at a same or different distance from the fluid atomizing machine.

According to a further possible embodiment of the method a spraying angle of the at least one nozzle is at a first value before and after the fluid atomizing machine approaches and leaves a spraying position for the target and is changed to a second value when the fluid atomizing machine passes the spraying position, wherein the second value is larger than the first value.

The method can be characterized also by the features described in conjunction with the fluid atomizing machine and vice versa.

Further features and advantages of embodiments of the invention are described in the following with regard to the related and enclosed figures.

### Description of the figures

In the following, possible embodiments of the different aspects of the present invention are described in more detail with reference to the enclosed figures.
- Fig. 1: shows a determined optimized path between plants for spraying fluid on the plants by the fluid atomizing machine according to an exemplary embodiment of the present invention;
- Fig. 2: shows a rear view of the fluid atomizing machine according to an exemplary embodiment of the present invention;
- Fig. 3: shows the fluid atomizing machine according to an exemplary embodiment of the present invention when spraying fluid on plants according to an exemplary embodiment of the method of the present invention;
- Fig. 4A - 4d: show four different phases of spraying the liquid on a target according to an exemplary embodiment of the method of the present invention;
- Fig. 5a - 5b: show two different cases for different positions of the fluid atomizing machine relative to the targets when spraying fluid on the targets according to an exemplary embodiment of the method of the present invention;
- Fig. 6a -6c: shows three different opening positions of a nozzle in a fluid atomizing machine according to an exemplary embodiment of the present invention; and
- Fig. 7: shows a schematic flowchart of method steps of a method according to an exemplary embodiment of the present invention.

In the figures same reference signs are related to equal or similar elements.

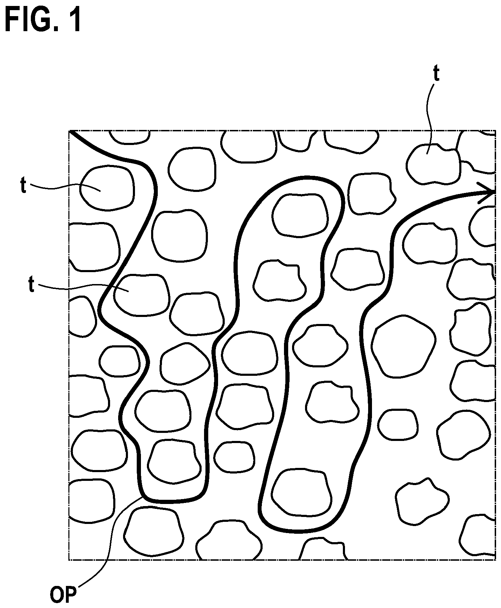

Fig. 1 shows a determined optimized path between plants for spraying fluid on the plants by the fluid atomizing machine according to an exemplary embodiment of the present invention.

In Fig. 1 a top view on a field of trees t is shown. The atomizing machine can determine and follow an optimized path OP through the field of trees for which most of the trees can be treated by spraying the fluid.

To find the optimized path it is possible that the processing unit comprises a positioning system or is configured to receive positioning data or satellite data from a positioning system or from a satellite, wherein the processing unit is configured to match the positioning data or satellite data with the data provided by a sensor of the atomizing machine.

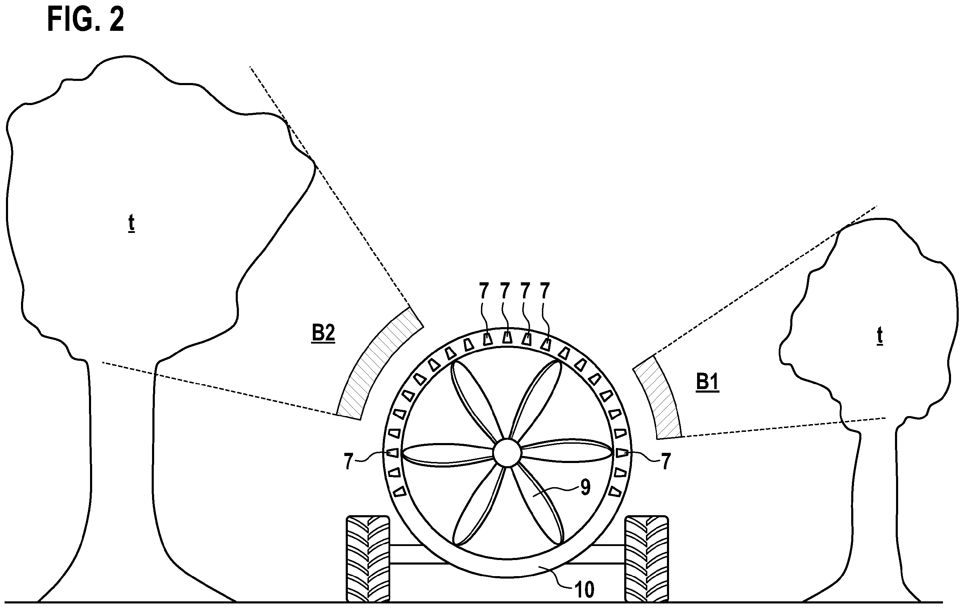

Fig. 2 shows a rear view of the fluid atomizing machine according to an exemplary embodiment of the present invention.

The fluid atomizing machine 10 is shown from a rear-view. When the presence of at least one target t is determined, the irrigation device can distribute the fluid onto the targets such that only said nozzles 7 are actuated (opened) which are able to spray the fluid onto the targets by determined flow rates of the fluid. In particular, for the right tree the first target area B1 is determined and the corresponding nozzles 7 are operated. Similar, for the left tree t the second target area B2 is determined and the corresponding nozzles 7 are operated which can cover the second target area by atomized fluid. By means of the fan 9 it is possible to distribute the atomized fluid over the first and second area B1 and B2.

The nozzles 7 can be arranged on an outer circular surface of the fan which faces the direction of the target objects.

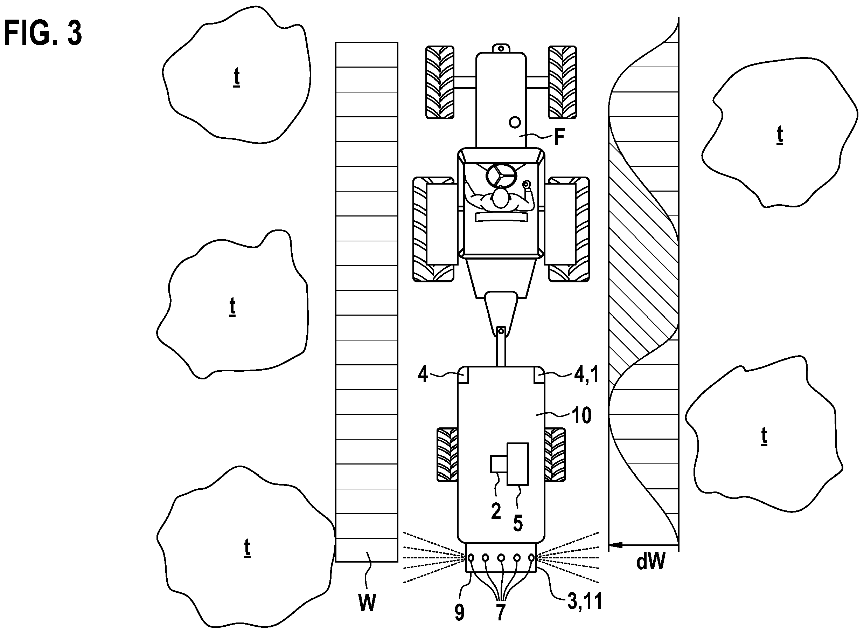

Fig. 3 shows the fluid atomizing machine according to an exemplary embodiment of the present invention when spraying fluid on plants according to an exemplary embodiment of the method of the present invention.

The fluid atomizing machine 10 comprises a sensing device 1 having at least one sensor 4, which is configured to determine a presence of at least one target t; an irrigation device 3 having a fluid tank 5, a pump (not shown) and a plurality of electrically actuated nozzles 7 which are configured to spray a fluid from the fluid tank 5 onto the target t; and a processing unit 2, wherein the processing unit 2 is configured to receive data from the sensor 4 and to process the data provided by the sensor 4 and to calculate flow rates for the fluid and to actuate at least one nozzle 7 according to a position of the target t, and wherein the irrigation device 3 is configured to eject the fluid from the nozzles 7 according to the calculated flow rate.

In Fig. 3 a top view is shown and the atomizing machine 10 is shown to be embodied as a trailer which can be carried by a machine, for example by a tractor F. While the atomizing machine 10 is pulled by, it can spray the liquid onto the targets t (trees). On the left side of the machine a fluid distribution W is shown as it is usually sprayed on trees by known atomizing machines. Said known method provides a uniform fluid distribution over the whole path along the field of targets t. On the right side of the machine an adjusted water distribution dW is shown according to the method of the present invention. There, the full flow rate (or an increased flow rate) of the sprayed liquid can be provided only when a target is close to the machine 10 and the flow rate can be lowered or switched to zero during the atomizing machine 10 passes the space between the targets.

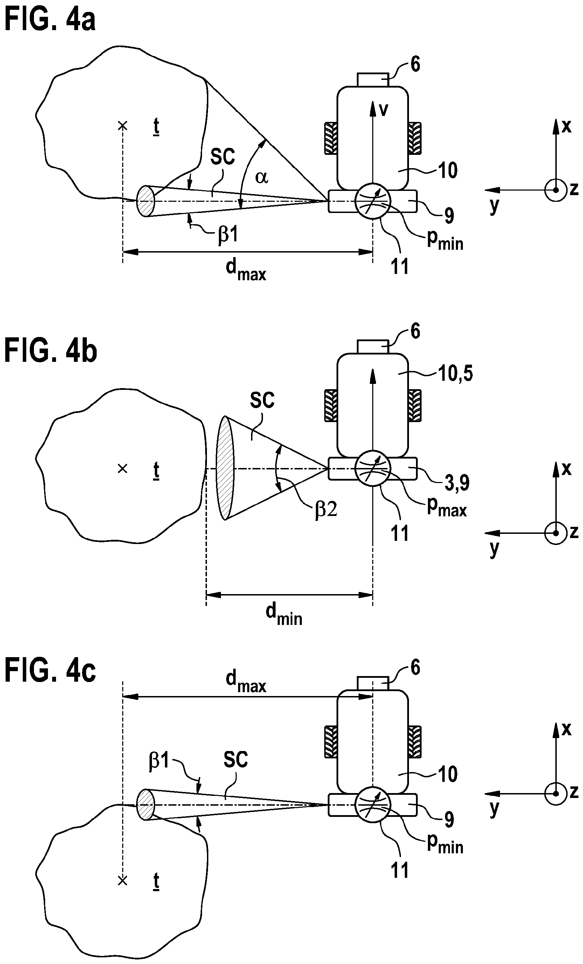

Fig. 4a - 4d show four different phases of spraying the liquid on a target according to an exemplary embodiment of the method of the present invention.

Fig. 4a shows the first phase when the atomizing machine 10, in particular the position of the nozzles (position of the fan 9), has yet not reached the target t or until a projection of the position of the nozzles onto the target t perpendicular to a direction v of passing the target t approaches the target surface.

After the acquisition of the target t, the system estimates the necessary volume of fluid depending on the surface of the target area. With this information, taking into account distance and vehicle speed, pressure value is calculated in order to ensure the water concentration. This quantity is the integral of flow rate over time that the tree must receive and it should be spread as uniformly as possible.

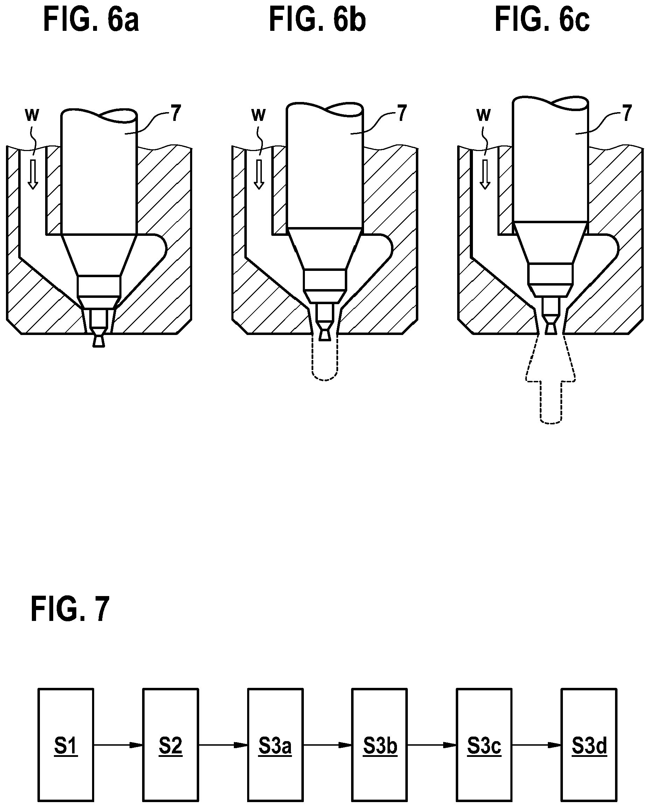

In the first phase as the vehicle F with the atomizing machine 10 and its fan 9 approach to the target t the spray angle β1 for the spray cone SC should be narrow and the nozzles pressure must be set, for example by the pump 6 and the spray cone can be adjusted by the dosing unit 11, at the minimum level pₘᵢₙ. This feature is covered either with a metering unit (e.g. ZME 850 or FMU) plus a spray with a variable cone or an injector with a controlled nozzle (needle respectively) lift that couples both functions of cone angle and pressure losses (e.g. figure 6 shows a nozzle with a controlled lift; if the nozzle is slightly open the pressure losses are maximized and the cone is narrow, while with its maximum opening the pressure losses are minimized and the cone gets its maximum angle). In order to estimate the optimum range for the cone angle β1 the present maximum distance dₘₐₓ and the full angle α (solid angle) for covering the whole target t can be used. The calculation of the angles (Spray angle, full angle) can be based on 3D field target mapping.

Fig. 4b shows the second phase after the machine 10 has reached the minimum distance dₘᵢₙ next to the target and while it passes the target t. During this phase the amount of fluid onto the target must be maximized in order to cover the target by the predefined amount of fluid. For this purpose the spray cone SC is enlarged to an enlarged angle β2 and the pump 6 increases the pressure for the fluid to a maximum spray pressure pₘₐₓ. In other words, as the vehicle move forwards the nozzles spray angle and the pressure should be set at the maximum level (e.g. with the injector this function is ensured with its maximum opening).

Fig. 4c shows a third phase after the machine 10 has passed the target t and again has a maximum distance to a trajectory of targets which can be followed, at least partly, in parallel and until the next target is reached. The adjustment of the spray cone SC and the spray pressure can again correspond to said adjustment of phase 1 as shown in Fig. 4a (spray angle and the pressure can be set at the minimum levels).

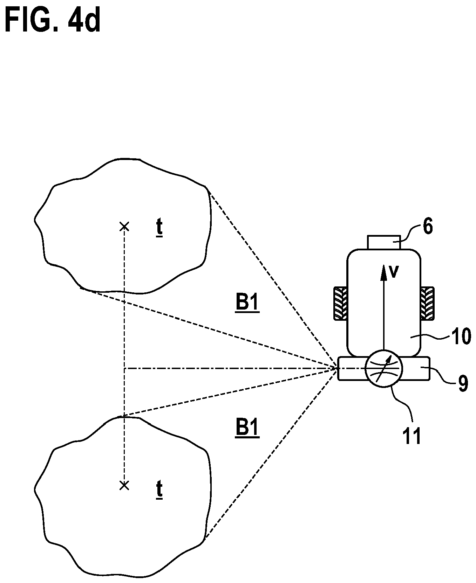

Fig. 4d shows a relative position between two targets t, which are for example both estimated to have a target area B1 to be sprayed on, or where no fluid distribution is needed and the dosing system is completely closed.

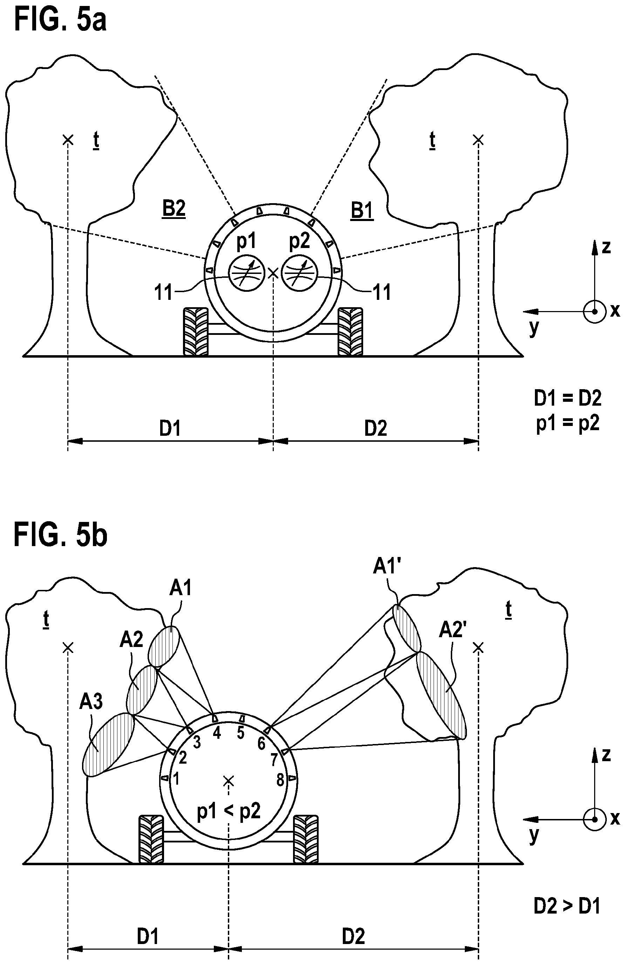

Fig. 5A - 5b show two different cases for different positions of the fluid atomizing machine relative to the targets when spraying fluid on the targets according to an exemplary embodiment of the method of the present invention.

Another example of a fluid saving approach is shown in Fig. 5a and 5b, wherein an atomizer machine 10 is shown between two targets t (trees) in a Y-Z-plane, wherein the relative positions among them is variable.

Fig. 5a shows a case where the atomizing machine is between two trees t, such that the nozzles which face the tree next to them have a similar (with a variation in distance D1, D2 within 10 %) or equal distance between each other. In other words, the central axis of the atomizing machine can be at a first distance D1 to a central axis of the left tree and the central axis of the atomizing machine can be at a second distance D2 to a central axis of the right tree, wherein the first and second distance are equal or similar. The target areas of both targets (B1, B2) can be similar or different. In order to reach the targets at their particular distances on both sides the same pressure p1 and p2 must be provided by the dosing device 11.

For the case shown in Fig. 5b, wherein the first distance D1 and the second distance D2 differ, the atomizing machine is closer to the tree on the left, and more nozzles are involved in order to cover the surface, while on the right side a lower number of nozzles is adopted. Since the required water concentration is the same for both trees and the involved right nozzles number is lower, it follows that the pressure on the right side p2 should be higher than to the pressure p1 on the left side. Providing different pressures to the nozzles is a function ensured by the combination of dosing system 11 and the variable nozzle cones or, as described before, with a variable injector with a controlled nozzle lift or needle lift respectively (Fig. 6). The pressures and flow rates can also be adjusted by control valves. The nozzles on the left side can spray on target areas A1, A2 and A3 each, for example, which cover parts of the tree t on the left side and the nozzles on the right side can spray on target areas of A1' and A2', for example, which can differ in size from the areas A1 - A3 on the left side.

Fig. 6A - 6c show three different opening positions of a nozzle in a fluid atomizing machine according to an exemplary embodiment of the present invention.

Figure 6a, b and c show a nozzle 7 with flowing water w (fluid) with a controlled lift; if the nozzle (needle) 7 is slightly open the pressure losses are maximized and the cone is narrow (Fig. 6b), while with its maximum opening (Fig. 6c) the pressure losses are minimized and the cone gets its maximum angle. Fig. 6a shows the nozzle 7 while it is in a closed position.

Fig. 7 schematically shows the steps of the method according to an exemplary embodiment of the present invention.

The method for spraying an atomized fluid on a target using a fluid atomizing machine according to the invention comprises the steps of determining S1 a presence of at least one target by a sensing device having at least one sensor; spraying S2 a fluid from the fluid tank onto the target by an irrigation device having a fluid tank, a pump and a plurality of electrically actuated nozzles; and receiving S3a data from the sensor and processing S3b the data provided by the sensor and calculating S3c flow rates for the fluid by the processing unit and actuating S3d at least one of the nozzles according to a position of the target by the processing unit, wherein the irrigation device is configured to eject the fluid from the nozzles according to the calculated flow rate.

The present invention is not limited to the described embodiments although the present invention is fully described based on the mentioned embodiments and can be modified in various ways.

## Claims

1. Fluid atomizing machine (10) comprising:
- a sensing device (1) having at least one sensor (4), preferably a radar sensor, which is configured to determine a presence of at least one target (t), preferably a tree;
- an irrigation device (3) having a fluid tank (5), a pump (6) and a plurality of electrically actuated nozzles (7) which are configured to spray a fluid from the fluid tank (5) onto the target (t), preferably the tree; and
- a processing unit (2), wherein
the processing unit (2) is configured to receive data from the sensor (4), preferably the radar sensor, and to process the data provided by the sensor (4), preferably the radar sensor, and to calculate flow rates for the fluid and to actuate at least one nozzle (7) according to a position of the target (t), preferably the tree, and wherein the irrigation device (3) is configured to eject the fluid from the nozzles (7) according to the calculated flow rate.

2. Fluid atomizing machine (10) according to claim 1, wherein the sensing device (1) is configured to provide real-time target presence measurements and a relative position between the irrigation device (3) and the target (t).

3. Fluid atomizing machine (10) according to claim 1 or 2, wherein the sensor (4) comprises a visual sensor and/or an infrared sensor and/or a proximity sensor having at least a same working range as the nozzles (7).

4. Fluid atomizing machine (10) according to any one of claims 1 to 3, wherein the tank (5) comprises a water tank and a pesticide tank and the irrigation device (3) is configured to provide the fluid as a water-pesticide mixture according to a predefined concentration.

5. Fluid atomizing machine (10) according to any one of claims 1 to 4, wherein the processing unit (2) comprises a positioning system or is configured to receive positioning data or satellite data from a positioning system or from a satellite, wherein the processing unit (2) is configured to match the positioning data or satellite data with the data provided by the sensor (4).

6. Fluid atomizing machine (10) according to any one of claims 1 to 5, wherein the sensor (4) comprises a Lidar or a rangefinder device and the processing unit (2) is configured to determine a projected surface of the target and its distance from the fluid atomizing machine (10) and to adapt a quantity of the sprayed fluid and to determine the at least one nozzle (7) to be actuated.

7. Fluid atomizing machine (10) according to any one of claims 1 to 6, wherein the sensing device (1) comprises a near infrared camera and the processing unit (2) is configured to detect a near infrared reflexion from the target and to determine chemical and material properties of the target.

8. Fluid atomizing machine (10) according to any one of claims 1 to 7, wherein the processing unit (2) is configured to perform machine learning techniques for detecting the target (t) and/or an area of the target (t) on which the fluid has to be sprayed.

9. Fluid atomizing machine (10) according to any one of claims 1 to 8, wherein the processing unit (2) is configured to determine a spraying angle and at least one nozzle (7) for targeted spraying and for adapting the spraying to a detected target distance.

10. Fluid atomizing machine (10) according to any one of claims 1 to 9, wherein the irrigation device (3) has a fan (9) for fluid nebulisation and a dosing system (11).

11. Fluid atomizing machine (10) according to any one of claims 1 to 10, wherein the nozzles have a variable geometry at their opening which enables the variation of the flow rate, wherein the nozzles can be individually opened and their flow rate varied.

12. Method for spraying an atomized fluid on a target (t), preferably a tree, using a fluid atomizing machine (10) according to any of claims 1 to 11, comprising the steps:
- determining (S1) a presence of at least one target (t), preferably a tree, by a sensing device (1) having at least one sensor (4), preferably a radar sensor;
- spraying (S2) a fluid from the fluid tank (5) onto the target (t), preferably the tree, by an irrigation device (3) having a fluid tank (5), a pump (6) and a plurality of electrically actuated nozzles (7); and
- receiving (S3a) data from the sensor (4), preferably the radar sensor, and processing (S3b) the data provided by the sensor, preferably the radar sensor, and calculating (S3c) flow rates for the fluid by the processing unit (2) and actuating (S3d) at least one of the nozzles (7) according to a position of the target, preferably the tree, by the processing unit (2), wherein the irrigation device (3) is configured to eject the fluid from the nozzles according to the calculated flow rate.

13. Method according to claim 12, wherein a fluid volume is estimated which is needed to fully cover a desired area of a surface of the target (t) and a distance (d, d1, d2) between the fluid atomizing machine (10) and the target (t) is estimated and a travelling speed of the fluid atomizing machine (10) is estimated and afterwards a pressure value for the fluid is calculated and applied to the fluid which is needed for the fluid to reach the target when sprayed by the nozzles (7).

14. Method according to claim 13, wherein fluid is sprayed on different targets (t1, t2, ..., tn) which are at a same or different distance from the fluid atomizing machine (10).

15. Method according to any of claims 12 to 14, wherein a spraying angle of the at least one nozzle (7) is at a first value before and after the fluid atomizing machine (10) approaches and leaves a spraying position for the target (t) and is changed to a second value when the fluid atomizing machine (10) passes the spraying position, wherein the second value is larger than the first value.
